(19) Europäisches Patentamt
European Patent Office
Office européen des brevets

(11) **EP 4 400 899 A1**

(12) **EUROPEAN PATENT APPLICATION**
published in accordance with Art. 153(4) EPC

(43) Date of publication:
**17.07.2024 Bulletin 2024/29**

(21) Application number: **22867443.8**

(22) Date of filing: **09.09.2022**

(51) International Patent Classification (IPC):
**G02C 7/08** (2006.01)　　**G02C 11/00** (2006.01)
**G02B 3/14** (2006.01)　　**G02F 1/17** (2019.01)

(52) Cooperative Patent Classification (CPC):
**G02B 3/14; G02C 7/08; G02C 11/00; G02F 1/17**

(86) International application number:
**PCT/JP2022/033923**

(87) International publication number:
**WO 2023/038122 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021　JP 2021147951
10.09.2021　JP 2021147979**

(71) Applicant: **Vixion Inc.
Tokyo 169-0075 (JP)**

(72) Inventors:
• **TAKIZAWA, Shigeru
Tokyo 169-0075 (JP)**
• **UCHIUMI, Toshiharu
Tokyo 169-0075 (JP)**

(74) Representative: **SSM Sandmair
Patentanwälte Rechtsanwalt
Partnerschaft mbB
Joseph-Wild-Straße 20
81829 München (DE)**

(54) **VARIABLE FOCUS LENS CONTROL DEVICE, OCULAR LENS DEVICE, GLASSES, AND CONTROL METHOD**

(57)　　Provided is a variable-focus-lens control apparatus that can obtain a higher myopia suppression effect than conventional ones.

A variable-focus-lens control apparatus 10 controls a focal length of a variable focus lens 3 for eyes, and is characterized by having a control portion for executing a focal length control to control the focal length of the variable focus lens so that the focal length becomes longer or shorter continuously or stepwise. By executing the present focal length control to control the focal length of the variable focus lens, a high myopia suppression effect and the like can be obtained.

FIG. 1

EP 4 400 899 A1

**Description**

TECHNICAL FIELD

The present invention relates to variable-focus-lens control apparatus, ophthalmic lens apparatus, spectacles, and control method.

BACKGROUND ART

In recent years, it has become a problem that users who continue to view display devices such as personal computers, game consoles, tablets, and smartphones at a certain short distance for long periods of time can cause near-sightedness or worsen near-sightedness. It is thought that when an eye remains focused at a certain short distance, the eye adapts to view better at that short distance, causing the axial length of the eye to lengthen and near-sightedness to progress.

Patent Literature 1 discloses a apparatus that controls a focal length of a variable focus lens to vibrate so rapidly that a user cannot detect it, in order to delay an onset or progression of near-sightedness. This apparatus allows nearsighted users wearing the variable focus lens to switch between a focal length in the in-focus state and a focal length corresponding to plus power (+3D) (the focal length in the out-of-focus state), at a frequency so high that it cannot be sensed by the user. According to Patent Literature 1, by repeatedly causing the user to observe an imperceptible momentary and temporary defocus, effects such as delaying the onset or progression of near-sightedness can be obtained.

CITATION LIST

PATENT LITERATURE

Patent Literature 1: Japanese Unexamined Patent Application Publication No. 2017-173825.

SUMMARY OF INVENTION

TECHNICAL PROBLEM

Although it is effective to control the focal length of the variable focus lens in order to obtain the effect of delaying the onset or progression of near-sightedness, there is still room for improvement in order to obtain a higher effect.

SOLUTION TO PROBLEM

An aspect of the present invention is a variable-focus-lens control apparatus for controlling a focal length of a variable focus lens for eyes, it includes a control portion for executing a focal length control to control the focal length of the variable focus lens so that the focal length becomes longer or shorter continuously or stepwise.

In this control apparatus, when the user is viewing a view object through the variable focus lens, the focal length of the variable focus lens changes automatically and/or under appropriate adjustment control, such as longer or shorter continuously or stepwise. This causes the user to consciously or unconsciously relax or contract a ciliary muscle of the eye in order to focus the eye on the view object that becomes blurred as the focal length changes. By relaxing and contracting the ciliary muscle of the user's eye in this way, an effect of suppressing the onset or progression of near-sightedness (myopia suppression effect) can be expected by suppressing the elongation of the axial length of the eye to allow the eye to adapt to the short distance, and conversely, an effect of suppressing the onset or progression of far-sightedness (hyperopia suppression effect) can also be expected. In addition, an effect of suppressing the onset or progression of other eye abnormalities (refractive error, etc.) such as astigmatism (hereinafter referred to as "myopia suppression effect, etc." together with the myopia suppression effect, the hyperopia suppression effect, etc.) may be able to be obtained.

In the foregoing variable-focus-lens control apparatus, the focal length control may control the focal length of the variable focus lens so that the focal length becomes continuously longer or shorter over a predetermined change time.

In the control apparatus, the focal length of the variable focus lens is automatically changed to continuously longer or shorter over a predetermined change time. This allows the ciliary muscle in the user's eye to continuously relax and contract in order to focus the eye on the view object that gradually becomes blurred in response to the continuously changing focal length. According to this, compared to a control method in which the focal length is instantaneously changed between a focal length that is in focus and a focal length that is out of focus and thereby the user is forced to observe an imperceptible momentary and temporary defocus, it becomes possible to more reliably relax and contract the ciliary muscle of the user's eye, and a higher myopia suppression effect, etc. can be expected.

In the foregoing variable-focus-lens control apparatus, the predetermined change time may be set so that a change in the focal length by the focal length control is so slow that it is difficult for humans to recognize the change.

As with this control apparatus, when a change in the focal length of the variable focus lens is so slowly that it is difficult for humans to recognize it, that is to say when the focal length of the variable focus lens changes so slowly that it is difficult for humans to recognize it, users are less likely to notice the change in the focal length than a conventional control method that momentary changes the focal length. Therefore, even if the user continues to view the view object for a long time through the variable focus lens, the user is unlikely to feel discomfort or get tired. As a result, it becomes possible to continuously relax and contract the ciliary muscle of the user's eye over a long period of time, and it is expected that a higher myopia suppression effect, etc. will be obtained.

In the foregoing variable-focus-lens control apparatus, the predetermined change time may be 3 seconds or more.

When the change time of the focal length control is less than 3 seconds, even if the focal length is changed with a minimum change amount (change width) necessary to obtain the myopia suppression effect, etc., the focal length changes quickly (a rate of change is large), users are more likely to notice the change in focal length, and feel uncomfortable or get tired easily. According to the control apparatus, since the change time of the focal length control is 3 seconds or more, it becomes possible that the ciliary muscle of the user's eye is continuously relaxed and contracted over a long period of time so that the myopia suppression effect, etc. can be obtained.

In particular, if the predetermined change time is 30 seconds or more, even if the change amount (change width) in focal length by the focal length control is increased in order to obtain the more myopia suppression effect, a speed of change in focal length is suppressed (the rate of change is kept small), it is possible to make it less likely for the user to feel uncomfortable or get tired by the change in focal length.

Furthermore, if the predetermined change time is 3 minutes or more, even if the change amount (change width) in focal length by the focal length control is further increased in order to obtain the more myopia suppression effect, a speed of change in focal length is suppressed (the rate of change is kept small), it is possible to make it less likely for the user to feel uncomfortable or get tired by the change in focal length.

In the foregoing variable-focus-lens control apparatus, the control portion may execute the focal length control so that a rate of change in the focal length increases as time passes.

When executing the focal length control that controls the focal length of the variable focus lens so that the focal length becomes longer or shorter continuously or stepwise in order to achieve various purposes, it is often effective to achieve the purposes so that the user viewing the view object through the variable focus lens is not aware of changes in the focal length of the variable focus lens.

For example, the focal length control may be performed for the purpose of suppressing the onset or progression of near-sightedness (myopia suppression effect) by suppressing the elongation of the axial length of the eye as the eye adapts to the short distance. In this case, the ciliary muscle of the user's eye relaxes or contracts in order to focus the eye on the view object that blurs according to the continuously or gradually changing focal length, and thereby the myopia suppression effect is expected. At this time, if the user notices and becomes conscious of the change in the focal length of the variable focus lens, the user may feel uncomfortable or get tired easily, it becomes difficult to continue to view the view object through the variable focus lens where the focal length control described above is performed. As a result, the ciliary muscle of the user's eye cannot be continuously relaxed and contracted for a sufficient period of time, and a high myopia suppression effect may not be obtained. In other words, if the change in the focal length of the variable focus lens is not noticed or conscious by the user, it is less likely that the user feels discomfort or gets tired, and it is possible to continuously perform movements to relax and contract the ciliary muscle of the user's eye over a sufficient period of time, and the high myopia suppression effect can be expected. This is considered to be the same in the case of trying to obtain the myopia suppression effect, etc., such as an effect of suppressing the onset or progression of far-sightedness (hyperopia suppression effect) and an effect of suppressing the onset or progression of other eye abnormalities (refractive error, etc.) such as astigmatism.

Here, for the user who views the view object through the variable focus lens, a time when the focal length of the variable focus lens starts to change is relatively sensitive to the change in the focal length. Therefore, if the rate of change in focal length during this sensitive period is large, the change in focal length is easily noticed and conscious by the user.

The focal length control in the present control apparatus is performed so that the rate of change in focal length increases as time passes, so the rate of change in focal length is small during a period when users are sensitive to the change in focal length (when the focal length of the variable focus lens starts to change). Therefore, it is difficult for the user to be aware of the change in the focal length, and it becomes possible to perform the focal length control continuously over a sufficient period of time, thereby it becomes possible to obtain effects that are effective in achieving the purpose of the focal length control (for example, myopia suppression effect, etc.).

In the focal length control of the present control apparatus, the rate of change in the focal length increases as time progresses from the beginning of the focal length change and beyond the sensitive period to the focal length change. This makes it possible to widen a control range (the change width of focal length) in focal length control within a limited time (a change time in focal length due to the focal length control), and to obtain sufficient effects from the focal length control.

Therefore, according to the present control apparatus, even if the control range (change width of focal length) in focal length control is widened so that sufficient effects can be exerted by the focal length control, it is difficult for the user to be aware of the change in the focal length, and it becomes possible to obtain effects that are effective in achieving the purpose of the focal length control.

In the foregoing variable-focus-lens control apparatus, the control portion may execute the focal length control so that the focal length becomes longer or shorter exponentially.

According to the present control apparatus, when the focal length of the variable focus lens begins to change (when the user is sensitive to the change in focal length), the rate of change in focal length is kept as small as possible, and the control range for the focal length control (change width in focal length) can be made wide enough to obtain a sufficient effect. In particular, according to the present control apparatus, the rate of change in focal length increases smoothly, making it difficult for the user to notice or be aware of the change in focal length, which is effective enough in achieving the purpose of focal length control.

In the variable-focus-lens control apparatus described above, the control portion may execute the focal length control so that the focal length changes from a focal length corresponding to negative optical power to a focal length corresponding to positive optical power.

When performing the focal length control for myopia suppression effect, etc., a starting focal length of this focal length control is preferably set to a focal length corresponding to a focal length at which the user's eye is in focus, specifically, the user's optical power or refractive power (optical power or refractive power measured by an ophthalmologist, etc.; hereinafter referred to as "prescribed optical power"). By performing the focal length control with such settings, it is possible to realize a movement in which the ciliary muscle of the eye is relaxed or contracted from a state where there is no or little relaxation or contraction of the ciliary muscle of the eye.

When performing the focal length control to change the focal length from a focal length corresponding to negative optical power to a focal length corresponding to positive optical power, as in the present control apparatus, in a near-sighted user whose prescribed optical power is negative optical power, it is possible to realize the movement in which the ciliary muscle of the eye is relaxed or contracted from a state where there is no or little relaxation or contraction of the ciliary muscle of the eye. Therefore, according to the present control apparatus, it is possible to obtain a high myopia suppression effect. Note that even when performing the focal length control to change the focal length from a focal length corresponding to negative optical power to a focal length that adds a slight positive optical power, it is possible to realize a movement in which the ciliary muscle of the eye is relaxed from a state where there is no or little relaxation or contraction of the ciliary muscle of the eye, and it is possible to obtain the myopia suppression effect for the near-sighted user.

The foregoing variable-focus-lens control apparatus may include a setting change portion for changing a setting of the starting focal length of the focal length control.

According to the present control apparatus, the starting focal length of the focal length control can be appropriately changed to a setting suitable for the user's prescribed optical power. As a result, it is possible for various users to realize the movement in which the ciliary muscle of the eye is relaxed or contracted from a state where there is no or little relaxation or contraction of the ciliary muscle of the eye.

The foregoing variable-focus-lens control apparatus may include a change-range changing portion for changing a change range of the focal length that is changed by the focal length control.

According to the present control apparatus, the change range of the focal length by the focal length control can be changed as appropriate depending on various purposes. For example, the range of change in focal length can be changed depending on a degree of abnormality of the user's eye so that the myopia suppression effect, etc. can be obtained.

The foregoing variable-focus-lens control apparatus may further include a change-range changing portion for changing a change range of the focal length that is changed by the focal length control, according to the starting focal length whose setting is changed by the setting changing portion.

According to the present control apparatus, for example, when changing the starting focal length of the focal length control to a setting suitable for the user's prescribed optical power, it is possible to change the change range of focal length according to the user's prescribed optical power. Therefore, it is possible to change the range change of focal length according to the degree of abnormality of the user's eye, and it is possible to obtain higher myopia suppression effect, etc.

Still another aspect of the present invention is an ophthalmic lens apparatus that includes a variable focus lens for eyes, and a variable-focus-lens control device for controlling a focal length of the variable focus lens, in which the variable-focus-lens control apparatus described above is used as the variable-focus-lens control device.

Examples of the present ophthalmic lens apparatus include those used as articles worn by users, such as spectacles and contact lenses. In this way, by using the the present ophthalmic lens apparatus as the article worn by the user, the myopia suppression effect, etc. can be obtained during daily life (for example, while watching TV, playing on a game console, using a computer or tablet, or reading a book, etc.) with the user wearing the article.

In addition, examples of the present ophthalmic lens apparatus include those used as a stationary apparatus installed in an ophthalmology clinic or the like. In such a stationary ophthalmic lens apparatus, while the user is looking at a predetermined view object through the variable focus lens, the focal length of the variable focus lens changes longer or shorter continuously or stepwise, and it can be used to treat or prevent near-sightedness, etc.

Note that the variable focus lens and the variable-focus-lens control apparatus may be configured separately as long as they are electrically connected to each other by wire or wirelessly.

Still another aspect of the present invention is spectacles that includes the foregoing ophthalmic lens apparatus, in which the variable focus lens is held in a spectacle frame.

If the ophthalmic lens apparatus is used as spectacles, as described above, the myopia suppression effect, etc. can be obtained during daily life with the user wearing the spectacles. Additionally, in the case of spectacles, a configuration of the variable-focus-lens control apparatus can be placed in the spectacle frame that holds the variable focus lens, and a connection configuration between the variable focus lens and the variable-focus-lens control apparatus is simplified, thereby cost reduction is possible.

The foregoing spectacles may include a wearing detection portion for detecting that an user wears the spectacle frame, in which the control portion may start the focal length control when the wearing detection portion detects that the user wears the spectacle frame.

According to the present spectacles, once the user wears the spectacles, the focal length control is started without requiring any particular user operation. As a result, the change in the focal length due to the focal length control is started without the user being aware of it, so that it is difficult for the user to be aware of the change in the focal length.

Still another aspect of the present invention is a control method for controlling a focal length of a variable focus lens for eyes, in which the focal length of the variable focus lens is controlled so that the focal length becomes longer or shorter continuously or stepwise.

According to this control method, as in the case of the control apparatus described above, when the user views the view obj ect through the variable focus lens, the focal length of the variable focus lens is automatically changed to become longer or shorter continuously or stepwise. As a result, by forcibly relaxing or contracting the ciliary muscle of the user's eye, the myopia suppression effect, etc. can be expected.

In addition, in the present control method, if the ciliary muscle of the user's eye is continuously and slowly relaxed or contracted, compared to a control method in which the user is forced to observe an imperceptible momentary and temporary defocus, it becomes possible to more reliably relax and contract the ciliary muscle of the user's eye, and a higher myopia suppression effect, etc. can be expected. In this case, there is an advantage that it is difficult for the user to notice that the view object is out of focus, so even if the user continues to view the view object for a long time through the variable focus lens, it is difficult for the user to feel discomfort or get tired. As a result, it becomes possible to continuously relax and contract the ciliary muscle of the user's eye over a long period of time, and it is expected that a higher myopia suppression effect, etc. will be obtained.

ADVANTAGEOUS EFFECTS OF INVENTION

According to the present invention, by controlling the focal length of the variable focal length lens, it is possible to obtain a higher myopia suppression effect, etc. than before.

BRIEF DESCRIPTION OF DRAWINGS

[FIG. 1] FIG. 1 is a front view schematically showing a configuration of spectacles in an embodiment 1.
[FIG. 2] FIG. 2 is a plan view schematically showing the configuration of the spectacles.
[FIG. 3] FIG. 3 is a schematic configuration diagram showing an example of a variable focus lens in the spectacles.
[FIG. 4] FIG. 4 is a block diagram showing a configuration of a control apparatus in the spectacles.
[FIG. 5] FIG. 5 is a flowchart showing a flow of a focal length control in the embodiment 1.
[FIG. 6A] FIG. 6A is an explanatory diagram showing an example of a change profile that changes linearly from a starting focal length to an ending focal length.
[FIG. 6B] FIG. 6B is an explanatory diagram showing an example of a change profile in which a rate of change in focal length increases as time passes from the starting focal length to the ending focal length.
[FIG. 7] FIG. 7 is a front view schematically showing another configuration of the spectacles in the embodiment 1.

[FIG. 8] FIG. 8 is a flowchart showing a flow of a focal length control in the embodiment 2.

[FIG. 9A] FIG. 9A is an explanatory diagram showing an example of a focal length change timing in the focal length control in the embodiment 2.

[FIG. 9B] FIG. 9B is an explanatory diagram showing another example of a focal length change timing in the focal length control in the embodiment 2.

[FIG. 10] FIG. 10 is an explanatory diagram showing an example of a focal length change timing in a focal length control in a comparative example.

DESCRIPTION OF EMBODIMENTS

[Embodiment 1]

Hereinafter, an embodiment (hereinafter, this embodiment will be referred to as "embodiment 1") in which the present invention is applied to spectacles as an ophthalmic lens apparatus equipped with a variable-focus-lens control apparatus will be described.

Note that the ophthalmic lens apparatus to which the present invention can be applied is not limited to glasses, but may be other articles worn and used by users, such as contact lenses. Further, the present invention is not limited to articles worn and used by users, but is also applicable to stationary ophthalmic lens apparatus installed in ophthalmology clinics and the like.

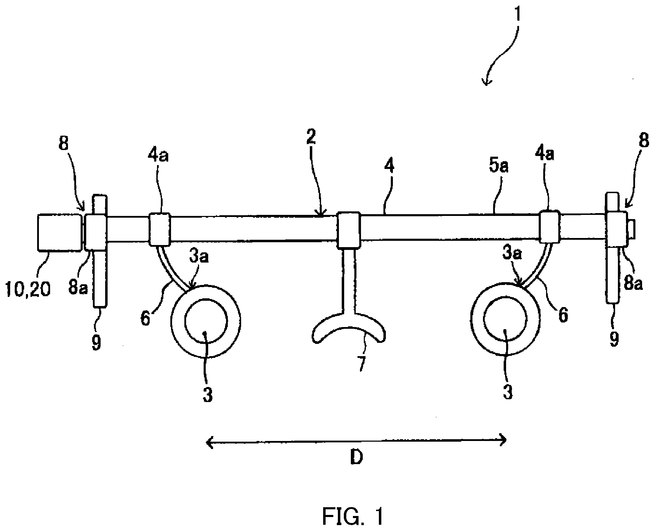

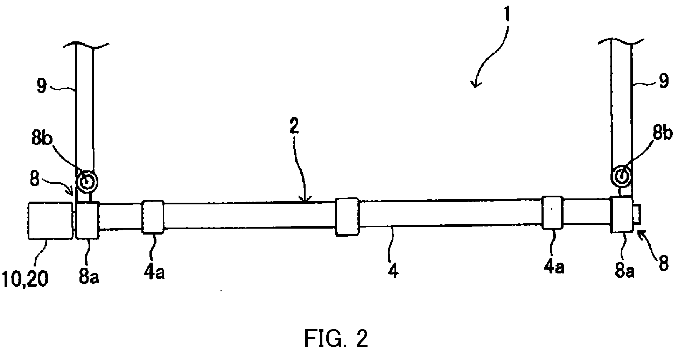

FIG. 1 is a front view schematically showing a configuration of spectacles 1 according to the embodiment 1, and FIG. 2 is a plan view schematically showing the configuration of the spectacles 1 according to the embodiment 1.

The spectacles 1 according to the embodiment 1 include a spectacle frame 2, a pair of left and right variable focus lenses 3, 3, and a control apparatus 10 as the variable-focus-lens control apparatus that controls focal length of the variable focus lenses 3, 3.

The spectacle frame 2 includes a bridge portion 4, a pair of left and right lens-holding portions 6, 6, a nose-pad portion 7, a pair of left and right endpiece portions 8, 8, and a pair of left and right temple portions 9, 9.

The bridge portion 4 is a member that is disposed at a position upwardly out of a wearer's field of vision when worn, and supports the left and right lens-holding portions 6, 6 that hold the variable focus lenses 3, 3. The bridge portion 4 extends in the left-right direction between the left and right endpiece portions 8, 8, and the endpiece portions 8, 8 are attached to both ends of the bridge portion 4 in the left-right direction. The bridge portion 4 is preferable to include an inter-lens-distance adjustment portion that connects the lens-holding portion 6 so that the lens-holding portion 6 can move in the left-right direction, and can adjust an inter-lens distance D in the left-right direction of the pair of left and right variable focus lenses 3, 3 held by the lens-holding portion 6. Note that the inter-lens distance D can be defined, for example, by a distance between the reference positions on the variable focus lenses 3, 3 (for example, center positions of the variable focus lenses 3, 3). Here, the reference position of the variable focus lenses 3, 3 is equal to, for example, an optical center position of the variable focus lenses 3, 3, and the inter-lens distance D is equal to a distance between optical centers of each variable focus lens 3, 3.

The lens-holding portions 6, 6 are members that hold the variable focus lenses 3, 3, and have an elongated shape (linear shape). Specifically, the lens-holding portions 6, 6 of the embodiment 1 are formed of plastically deformable wire members. The lens-holding portion 6 in the embodiment 1 extends from the bridge portion 4 of the spectacle frame 2, and holds the variable focus lens 3 by connecting its tip to a connected position 3a of an outer edge part of the variable focus lens 3. The lens-holding portion 6 is supported by the bridge portion 4 via a slide portion 4a, and the slide portion 4a constitutes the inter-lens-distance adjustment portion. Specifically, the slide portion 4a is a member that holds the lens-holding portion 6 slidably in the left-right direction with respect to the bridge portion 4. The slide portion 4a in the embodiment 1 is a hollow member, and is attached to the bridge portion 4 so as to be slidable along a longitudinal direction of the bridge portion 4 by inserting the bridge portion 4 into a hollow part thereof.

By providing the inter-lens-distance adjustment portion, the inter-lens distance D between the variable focus lenses 3, 3 can be adjusted in accordance with a pupillary distance PD of the user. For example, when the user views a near view object (in a case of a near-vision), the inter-lens distance D of the variable focus lenses 3, 3 is adjusted to be short, and when the user views a far view object (in a case of a far-vision), the inter-lens distance D of the variable focus lenses 3, 3 is adjusted to be long. When the variable focus lenses 3, 3 are smaller than normal ophthalmic lenses as in the embodiment 1, it is suitable for providing spectacles which are highly convenient for users that the inter-lens distance D of the variable focus lenses 3, 3 can be adjusted according to the pupillary distance PD of the user.

In the embodiment 1, the connected positions 3a of the variable focus lenses 3, 3 to which the lens-holding portions 6, 6 are connected are respectively positioned on outsides (on a side far from a nose, that is, on an ear side) of vertical imaginary lines passing through optical axes of the variable focus lenses 3, 3, as shown in FIG 1, and above a horizontal imaginary line passing through the optical axes of the variable focus lenses 3, 3. By configuring the lens-holding portions 6, 6 to be connected to this position, even if the lens-holding portions 6, 6 are in the wearer's field of vision, the lens-holding portions 6, 6 are less likely to feel like an obstruction.

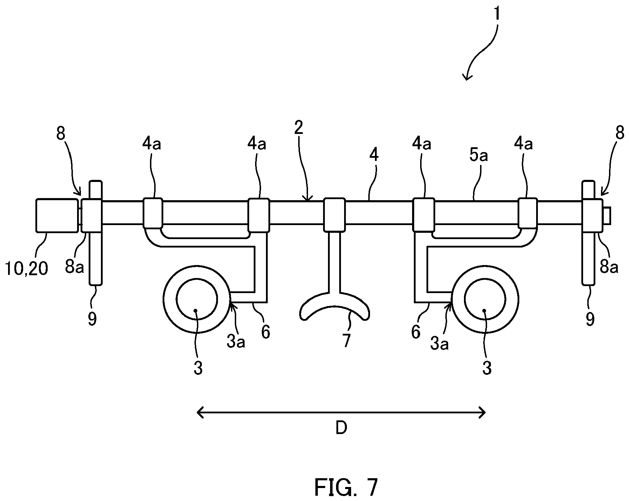

However, the connected position 3a of the variable focus lenses 3, 3 to which the lens-holding portions 6, 6 are connected is not limited to the position of the embodiment 1, and for example, as shown in FIG. 7, it may be positioned on insides (on a nose side) of the vertical imaginary lines passing through the optical axes of the variable focus lenses 3, 3.

The nose-pad portion 7 is a member that is held by the bridge portion 4 and comes into contact with the user's nose to position the spectacles 1 when the user wears the spectacles 1.

The endpiece portions 8, 8 are members that connect the bridge portion 4 and the temple portions 9, 9. The endpiece portions 8, 8 in the embodiment 1 include a mounting portion 8a that is attached to the end of the bridge portion 4, and a hinge portion 8b that rotatably supports the temple portion 9.

The temple portions 9, 9 are members that are hung on the user's ears when the user wears the spectacles 1. The left and right temple portions 9, 9 in the embodiment 1 are configured so that they can be folded toward a center in the left-right direction of the spectacles 1 by hinge portions 8b provided in the endpiece portions 8, 8, respectively.

The variable focus lenses 3, 3 in the embodiment 1 are not limited to a variable focus system, as long as they are variable focus lenses with an electrically controllable variable focus function. For example, there are a liquid crystal system that can change a focal length by electrically controlling a refractive index of a liquid crystal layer, and an electrostatic liquid system that use a liquid interface as a refractive surface and can change a focal length by electrically controlling a wettability of liquid to change a curvature of the interface, and the like. In particular, the electrostatic liquid system is preferable because it has a wide range of change in focal length and a high speed of change in focal length.

The variable focus lenses 3, 3 are of the electrostatic liquid system, and a known variable focus lens (also referred to as a focus changeable lens, an electrowetting device, a liquid lens, etc.) can be used. The variable focus lenses 3, 3 in the embodiment 1 are variable focus lenses whose lens parts have a diameter of about 5 mm to 12 mm, for example. Note that by using a larger variable focus lens, a range of the user's line of sight that can be covered by the variable focus lens is expanded, and user convenience can be improved.

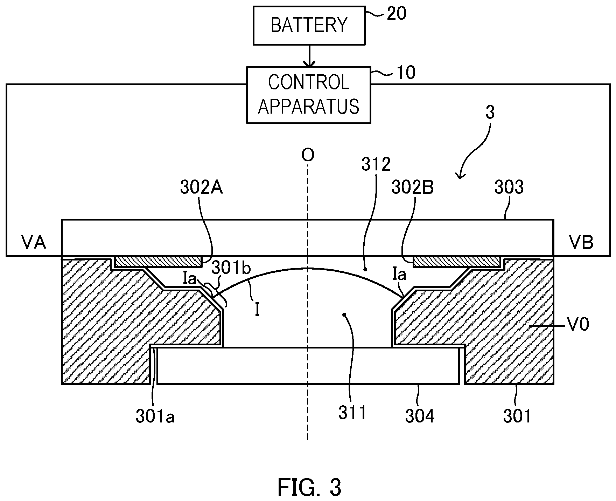

FIG. 3 is a schematic configuration diagram showing an example of the variable focus lens 3 in the embodiment 1.

The variable focus lens 3 shown in FIG. 3 has a configuration in which an insulating liquid 311 and a conductive liquid 312, which are in contact with each other in an unmixed state at an interface I, are enclosed by an annular first electrode 301 and two transparent window members 303 and 304 that close upper and lower ends of the first electrode 301. The insulating liquid 311 is, for example, an oil-based liquid, and the conductive liquid 312 is, for example, an aqueous liquid with relatively low conductivity. A voltage V0 is applied to the first electrode 301, but in the embodiment 1, since the annular first electrode 301 is grounded, the voltage V0 is equal to 0V. Further, the first electrode 301 is insulated from the insulating liquid 311 and the conductive liquid 312 sealed therein by an insulating layer 301a.

Further, in the variable focus lens 3 shown in FIG. 3, a plurality of pairs of second electrodes 302A, 302B, ... are arranged at symmetrical positions with respect to an axis O of the first electrode 301. In the embodiment 1, four pairs of second electrodes 302A to 302H are arranged on a circumference centered on the axis O, and a total of eight second electrodes 302A to 302H are provided. In FIG. 3, only one pair of second electrodes 302A and 302B among these second electrodes 302A to 302H is illustrated.

The second electrodes 302A to 302H are arranged at positions in contact with the conductive liquid 312. When voltages VA to VH are applied to each of the second electrodes 302A to 302H, a potential difference is generated between each of the second electrodes 302A to 302H and the first electrode 301, and due to the electrowetting effect, an end part Ia of the insulating liquid 311 (an end part Ia of the interface I) can be displaced along an insulating layer part 301b on the first electrode 301. By displacing the end part Ia of the insulating liquid 311 in this way, a shape of the insulating liquid 311 changes and a curvature of the interface I changes. Therefore, by controlling the voltages VA to VH applied to the second electrodes 302A to 302H, it is possible to change the focal length of the variable focus lens 3 whose refractive surface is the interface I.

In particular, in the variable focus lens 3 shown in FIG. 1, by controlling the voltages VA to VH applied to the second electrodes 302A to 302H, the interface I, which is the refractive surface, can be transformed to a diffusing lens (convex lens), a plane lens, or a condensing lens (concave lens). Therefore, the spectacles 1 of the embodiment 1 can be used as spectacles for near-sighted users by making the variable focus lens 3 the diffusing lens (the convex lens), and be used as spectacles for far-sighted users by making the variable focus lens 3 the condensing lens (the concave lens).

The variable focus lens 3 of the embodiment 1 can change the focal length within a range of -15D or more and +15D or less in diopter conversion (reciprocal of focal length). By using the variable focus lens 3 having such a wide range of change in focal length, for example, it is possible to accommodate users with low visual acuity such as low-vision.

Note that by applying the same voltage to all the second electrodes 302A to 302H arranged at symmetrical positions with respect to the axis O of the first electrode 301, the focal length can be changed without shifting the optical axis of the variable focus lens 3 (which coincides with the axis O of the first electrode 301 in the embodiment 1). On the other hand, by applying different voltages to each of the second electrodes 302A to 302H, it is possible not only to change the focal length but also to shift or tilt the optical axis of the variable focus lens 3.

As shown in FIG. 1, the control apparatus 10 is provided, together with a battery 20, in one of the left and right endpiece portions 8, 8 (the left endpiece portion 8 in the figure). The control apparatus 10 controls the focal length of the variable focus lens 3 by controlling a voltage applied from the battery 20 to each second electrode 302A to 302H of the variable focus lens 3.

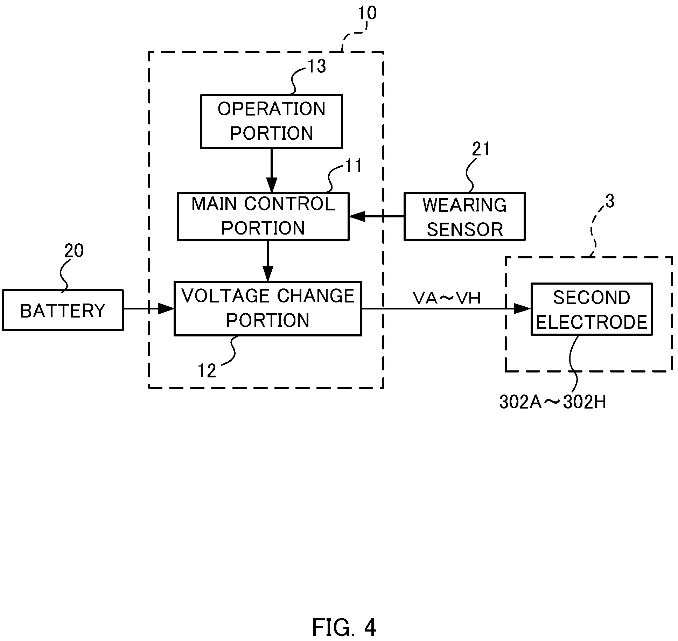

FIG. 4 is a block diagram showing a configuration of the control apparatus 10 in the embodiment 1.

The control apparatus 10 in the embodiment 1 includes a main control portion 11, a voltage change portion 12, and an operation portion 13. The control apparatus 10 is connected to the second electrodes 302A to 302H of the variable focus lens 3, a battery 20 as a power source for supplying voltage, and a wearing sensor 21 as a wearing detection portion for detecting that the spectacle frame 2 of the spectacles 1 is worn by the user.

The main control portion 11 is, for example, constituted by a control board (computer) on which a CPU, RAM, ROM, etc. are mounted, and performs overall control of the spectacles 1, which is an ophthalmic lens apparatus, by executing a predetermined control program stored in the ROM. In particular, in the embodiment 1, the main control portion 11 functions as a control portion (control means) that executes a focal length control to control the focal length of the variable focus lens 3.

The voltage change portion 12 changes the voltage applied from the battery 20 to each of the second electrodes 302A to 302H of the variable focus lenses 3 under the control of the main control portion 11. The voltage change portion 12 can individually change the voltage applied to each of the second electrodes 302A to 302H for each of the second electrodes 302A to 302H. However, the voltage change portion 12 may change all the second electrodes 302A to 302H at once, or may partially change only some of the second electrodes 302A to 302H (for example, only one pair of second electrodes).

The operation portion 13 is operated by the user to output an operation signal indicating an operation detail of the user to the main control portion 11. Examples of user operations received by the operation portion 13 include a power on/off operation, an execution instruction for the main control portion 11, and a change of control detail of the main control portion 11. The operation portion 13 is configured with a type of operating device (such as a mechanical or electrostatic touch button, a rotary operation portion such as a dial, etc.) suitable for a detail of the user operation to be received. Note that it is also possible to adopt a configuration that does not require these user operations, and in that case, the operation portion 13 can be omitted.

The battery 20 functions as the power source for the control apparatus 10 and outputs the voltage to be supplied to the second electrodes 302A to 302H of the variable focus lenses 3. The battery 20 may be a primary battery or a secondary battery. Alternatively, it may be equipped with a power generation function such as a solar panel.

The wearing sensor 21 may be a non-contact type sensor such as an infrared sensor, or a contact type sensor such as a voltage detection type sensor, as long as it can detect that the spectacle frame 2 of the spectacles 1 is worn by the user. The wearing sensor 21 of the embodiment 1 uses, for example, a contact type sensor that includes an electrode at a location on the spectacle frame 2 that comes into contact with the user's skin when the user wears the spectacles 1 and detects that the spectacle frame 2 is worn by the user by detecting a change in current flowing through the electrode.

Next, the focal length control of the variable focus lens 3 in the embodiment 1 will be explained.

Note that in the embodiment 1, a case will be described in which a myopia suppression effect that suppresses an onset or progression of near-sightedness by suppressing an elongation of an axial length of the eye as the eye adapts to a short distance is obtained, by forcing a ciliary muscle in the user's eyes to relax, when the user wearing the spectacles 1 views some view object (television, smartphone, tablet, game console, book, etc.) in daily life (especially when a distance to the visible object is relatively close and constant).

However, by forcibly contracting the ciliary muscle of the user's eye, there is a possibility that a hyperopia suppression effect that suppresses an onset or progression of far-sightedness can be obtained. In addition, forcibly relaxing or contracting the ciliary muscle in the user's eye may also have an effect of suppressing an onset or progression of other eye abnormalities (such as refractive error) such as astigmatism.

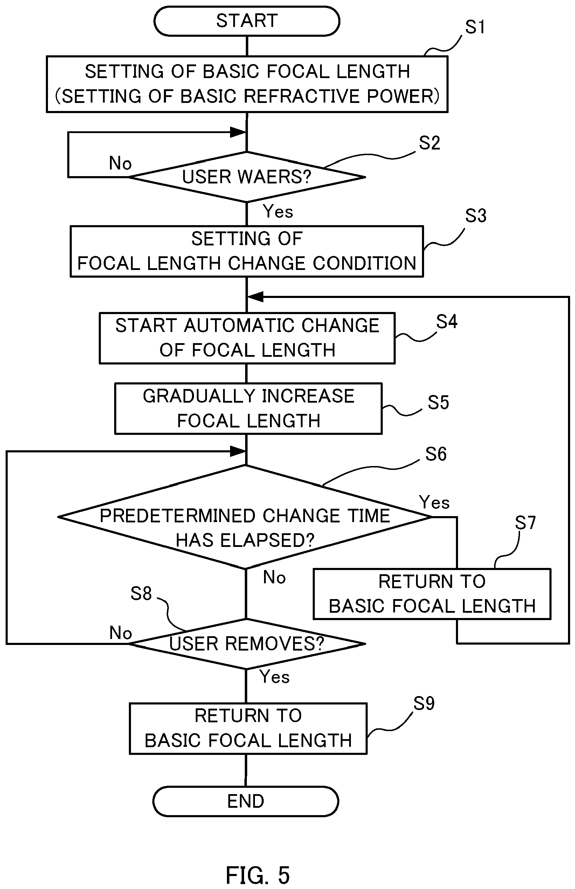

FIG. 5 is a flowchart showing a flow of the focal length control in the embodiment 1.

In the focal length control in the embodiment 1, the main control portion 11 that executes a predetermined control program controls the voltage change portion 12, thereby the focal length of the variable focus lens 3 is automatically changed so that the focal length of the variable focus lens 3 is continuously increased over a predetermined change time. More specifically, the focal length of the variable focus lens 3 is changed so slowly that it is difficult for humans to recognize a change in focal length (at a change speed which is so slow that it is difficult for humans to recognize the change in focal length).

In the embodiment 1, when starting the focal length control, first, if a setting of a basic focal length of the variable focus lens 3 has not been completed, the setting of the basic focal length is performed (S 1). The basic focal length is a focal length of the variable focus lens 3 when the focal length control has not been performed, and is usually set to a focal length corresponding to a prescribed optical power of the user. Here, since it is assumed that the user is near-sightedness, a focal length corresponding to negative optical power is set.

This setting work can be performed by a specialized worker or the user himself by operating the operation portion 13. For example, if the operation portion 13 is provided with a dial with optical power written on it, the basic focal length can be set by turning the dial to match the user's prescribed optical power. In this case, an electrical signal (operation signal) corresponding to a rotational position of the dial is sent to the main control portion 11, and the main control portion 11 controls the voltage change portion 12 to apply a voltage corresponding to this signal to the second electrodes 302A to 302H of the variable focus lens 3.

In a case that the setting of the basic focal length of the variable focus lens 3 has been completed, when the user wears the spectacles 1, this is detected by the wearing sensor 21 (Yes in S2), and a detection signal is sent from the wearing sensor 21 to the main control portion 11. Upon receiving this detection signal, the main control portion 11 executes a program for the focal length control and starts the focal length control.

In the embodiment 1, the focal length control is started on the condition that the detection signal from the wearing sensor 21 is received, but a starting condition for the focal length control is not limited to this. For example, the starting condition for the focal length control may be that the user performs an operation to instruct a start of the focal length control on the operation portion 13, and in this case, the wearing sensor 21 is not necessarily required. However, if the focal length control is started due to the user operation on the operation portion 13, since the user is made aware that the focal length control (a control that automatically changes the focal length) will be performed, the user may become sensitive to automatic (arbitrary) changes in the focal length, and may feel uncomfortable or get tired easily by the automatic change in the focal length. On the other hand, as in the embodiment 1, if the wearing sensor 21 is provided and the focal length control is started simply by the user wearing the spectacles 1, then it possible for the user to become less aware that the focal length control (the control that automatically changes the focal length) is being performed, and it is possible to reduce to feel uncomfortable or get tired easily by the automatic change in the focal length.

When the focal length control is started, the main control portion 11 first sets a focal length change condition (S3). The setting for this focal length change condition sets the focal length change condition such as a time to change the focal length (predetermined change time), a range of the focal length to change (change range of the focal length), a speed of change in focal length, and a change profile of the focal length, in the focal length control. Setting values for these conditions are stored in a storage portion such as a RAM in the main control portion 11, and the main control portion 11 reads out the setting values stored in the storage portion and sets the focal length change condition.

The setting values for the various focal length change conditions described above may be fixed values or variable values, and if they are variable values, for example, they may be values that can be changed in response to a user operation, or may be values that calculated by a predetermined calculation program. When the starting focal length of the focal length control is set as the variable value, the main control portion 11 functions as a setting change portion that changes the setting of the starting focal length, and functions together with the operation portion 13 as the setting change portion in a case that the variable value is changed according to the user operation. In addition, when the change range of the focal length is set as the variable value, the main control portion 11 functions as a change-range changing portion that changes the change range of the focal length, and functions together with the operation portion 13 as the change-range changing portion in a case that the variable value is changed according to the user operation.

Here, a time for changing the focal length (predetermined change time) is preferably set so that the change in focal length is so slow that it is difficult for humans to recognize it. For example, the time for changing the focal length (predetermined change time) is set such that a rate of change in the focal length due to the focal length control is greater than or equal to a rate of change that it becomes difficult for humans to recognize the change in focal length. The rate of change that it becomes difficult for humans to recognize the change in focal length can be determined by, for example, performing a sensory test. Specifically, for example, test subjects without refractive errors in their eyes are asked to answer whether they can recognize a change in the focal length of the variable focus lens 3, and the time (predetermined change time) is set such that for example, more than half of the number of the test subjects cannot recognize the change in the focal length. Note that, as will be described later, it is considered that the change in the focal length is relatively sensitive at the beginning of starting the focal length control, and becomes less sensitive to the change in the focal length as time passes after the focal length starts to change. Therefore, the rate of change that it becomes difficult for humans to recognize the change in focal length differs between when the focal length control is initially started and when time has elapsed.

Specifically, when the time for changing the focal length (predetermined change time) is, for example, 1/30 seconds or more and less than 3 seconds, even if the focal length is changed with a minimum change amount (change width) necessary to obtain the myopia suppression effect, etc., a speed of change in the focal length is too fast (the rate of change is too large), the user may are easily notice the change in focal length, causing to feel uncomfortable or get tired easily. Therefore, the time for changing the focal length (predetermined change time) is preferably 3 seconds or more. More preferably, it is 30 seconds or more, and still more preferably 3 minutes or more. By ensuring a sufficiently long change time in this way, even if the change amount (change width) in focal length by the focal length control is increased in order to obtain the more myopia suppression effect, the speed of change in focal length is suppressed (the rate of change is kept small), it is possible to make it less likely for the user to feel uncomfortable or get tired by the change in focal length.

Note that since there are individual differences, the effect may be confirmed even if the predetermined change time is about 1 second. Therefore, it is preferable to adjust the appropriate change time depending on individual differences, and the change time of the present invention is not necessarily limited to this embodiment.

There is no particular restriction on the upper limit of the time for changing in the focal length, but assuming a case of continuing to wear and use, it is preferable that a maximum time for changing the focal length is about 8 to 16 hours. However, a range of this time varies greatly by individual differences, and a range of the above-mentioned time may be changed as appropriate within a range of about 0.7 to 1.3 times.

Regarding a range of the focal length to be changed (range of change in focal length), the focal length at a start of change in focal length (starting focal length) is the basic focal length (i.e., basic optical power = focal length corresponding to prescribed optical power) set in processing step S 1. In this case, the main control portion 11 and the operation portion 13 constitute a setting change portion that changes a setting of the starting focal length of the focal length control.

Note that the starting focal length may be set to a focal length that is shifted from the basic focal length. However, by setting the starting focal length to the basic focal length (focal length corresponding to prescribed optical power), the user is already in focus at a start of the focal length control, so the user is less likely to notice to start the focal length control, and is less likely to feel uncomfortable or get tired by the change in focal length.

Further, regarding a range of the focal length to be changed (range of change in focal length), the focal length at an end of change in focal length (ending focal length) can be set, for example, according to the starting focal length. Specifically, for example, if the change width in focal length is a fixed value, a value obtained by adding the change width in focal length to the starting focal length is set as the ending focal length. Further, if table data or the like describing a correspondence between the starting focal length and the ending focal length is stored in the storage portion, the ending focal length is set according to the table data. The correspondence relationship between the starting focal length and the ending focal length is set to a relationship that is expected to increase the myopia suppression effect. For example, the relationship may be a relationship in which the ending focal length is set such that the larger the optical power corresponding to the starting focal length, the larger the change width in focal length, or vice versa, a relationship in which the ending focal length is set such that the larger the optical power corresponding to the starting focal length, the smaller the change width in focal length.

Regarding the speed of change in focal length, normally, the faster the speed of change, the easier it is for the user to notice the change in focal length, so the user may feel uncomfortable or get tired easily by the change in focal length in the focal length control. Therefore, it is preferable that the speed of change in focal length is as slow as possible within a range in which the myopia suppression effect can be obtained.

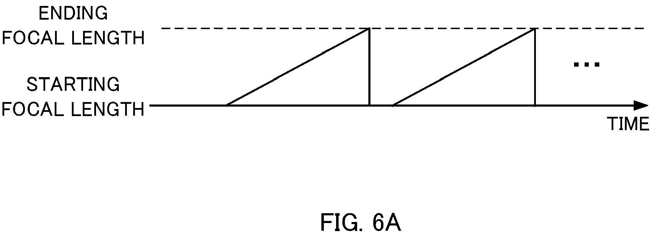

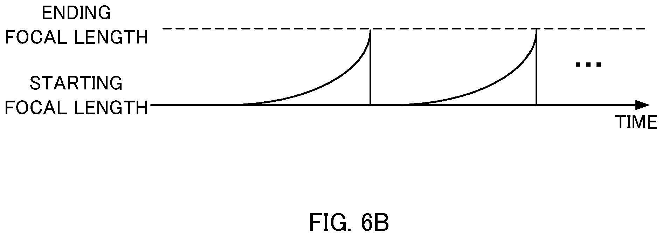

Further, the change profile of the focal length may be a change profile in which the focal length changes linearly over a predetermined change time, for example, as shown in FIG. 6A, or a change profile that exhibits an inverse parabolic or exponential change in which the rate of change in focal length increases as time passes as shown in FIG. 6B.

On the other hand, although the change in the portion from the ending focal length to the starting focal length shown in FIG. 6A or FIG. 6B is instantaneous, the rate of change in that portion may be also the exponential change in which the rate of change in focal length increases as time passes, for example, a change in focal length in which the rate of change is small near the ending focal length, and the rate of change increases exponentially as time passes until reaching the starting focal length. Further, it is preferable that the changes near the ending focal length and the starting focal length should be smoothly smoothed curves.

In particular, it is preferable for the change profile of focal length to be a change profile in which the rate of change in focal length increases as time passes. Such a change profile of the focal length is, for example, a change profile in which two or more periods with different rates of change in focal length exist within a predetermined change time, with the period having a larger change rate occurring later. Further, the change profile of focal length is, for example, a change profile in which the rate of change in focal length increases stepwise by one or more steps. Further, the change profile of focal length is, for example, a change profile in which the rate of change in focal length increases continuously.

A reason why a change profile in which the rate of change in focal length increases as time passes is used as the change profile in focal length is as follows.

At the beginning of the focal length control, the user is sensitive to the change in focal length, but by reducing the rate of change in focal length at the beginning of the focal length control, the user can be less likely to notice the change in focal length, and be less likely to feel uncomfortable or get tired. Then, as time progresses after the focal length control is started, and when the user's consciousness begins to concentrate on the view object and the user's consciousness of the change in focal length fades, the rate of change in focal length is gradually increased, thereby it is possible to realize a change in focal length that provides the myopia suppression effect without the user being aware of the change in focal length. Therefore, according to such a change profile, it is possible to continuously relax the ciliary muscle of the user's eye over a long period of time without the user noticing, and a higher myopia suppression effect can be obtained.

Note that the change profile of focal length may be, for example, a change profile in which the rate of change in the focal length decreases as time passes. In this way, even with the change profile in which the rate of change in focal length decreases as time passes, it is thought that it is possible to continuously relax the ciliary muscle in the user's eye over a long period of time without the user noticing, and there is a possibility that a higher myopia suppression effect can be obtained.

After setting the focal length change condition, the main control portion 11 controls the voltage change portion 12 according to the set focal length change condition, and starts a control to automatically change the focal length of the variable focus lens 3 (S4). As a result, the voltage applied to each of the second electrodes 302A to 302H of the variable focus lens 3 is continuously changed by the voltage change portion 12, so that the focal length of the variable focus lens 3 is controlled to gradually increase over a predetermined change time (S5). In the embodiment 1, in order to obtain the myopia suppression effect for nearsighted users, a control is performed to gradually increase the focal length from the starting focal length corresponding to the prescribed optical power of the nearsighted user (control to increase the diopter). Therefore, the focal length of the variable focus lens 3 changes continuously over a predetermined change time from a focal length corresponding to negative optical power to a focal length corresponding to positive optical power.

When the main control portion 11 changes the focal length of the variable focus lens 3 to the ending focal length and a predetermined change time has elapsed (Yes in S6), the main control portion 11 controls the voltage change portion 12 to return the focal length of the variable focus lens 3 to the basic focal length (focal length corresponding to the prescribed optical power) (S7). Thereafter, the processing step S4 is executed again, and a control is performed to automatically change the focal length of the variable focus lens 3 according to the set focal length change condition (S4 to S6).

There is no particular restriction on the method for returning the focal length of the variable focus lens 3 that has changed until the ending focal length, to the basic focal length (focal length corresponding to the prescribed optical power). Therefore, the focal length of the variable focus lens 3 may be changed instantaneously or discontinuously from the ending focal length to the basic focal length. Further, the focal length of the variable focus lens 3 is changed from the ending focal length to the basic focal length over a predetermined return time (which may be the same as the predetermined change time, shorter than the predetermined change time, or longer than the predetermined change time). For example, it may be continuously changed so as to go back the change profile that is changed from the starting focal length to the ending focal length.

On the other hand, when the user removes the spectacles 1, this is detected by the wearing sensor 21 (Yes in S8), and the detection signal is sent from the wearing sensor 21 to the main control portion 11. Upon receiving this detection signal, the main control portion 11 returns the focal length of the variable focus lens 3 to the basic focal length (focal length corresponding to the prescribed optical power) (S9), and ends the focal length control. In the processing step S9, since the user has removed the spectacles 1, it may be to return by using a method different from that used in the processing step S7. For example, the focal length of the variable focus lens 3 may be changed instantaneously or discontinuously from the ending focal length to the basic focal length.

[Embodiment 2]

Next, an embodiment (hereinafter, this embodiment will be referred to as "embodiment 2") that is another control example of the focal length control in embodiment 1 described above will be described.

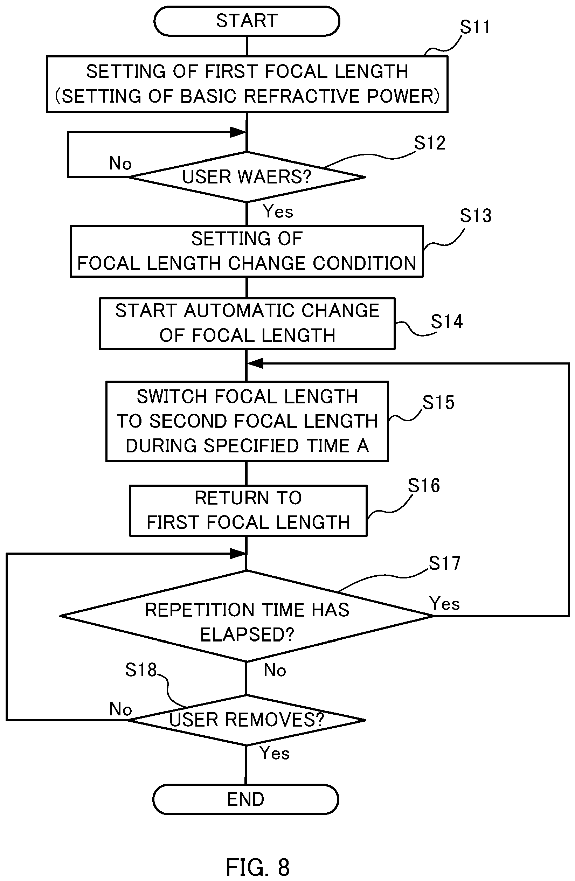

FIG. 8 is a flowchart showing a flow of a focal length control in the embodiment 2. The focal length control in the embodiment 2 is also a control in which the focal length of the variable focus lens 3 is automatically changed between a first focal length (starting focal length, basic focal length) and a second focal length (ending focal length) when the main control portion 11 that executes a predetermined control program controls the voltage change portion 12. However, the embodiment 2 differs from the embodiment 1 described above in that the focal length of the variable focus lens 3 is changed at such a high speed that it is difficult for humans to recognize the change in focal length (at a change speed that is so fast that it is difficult for humans to recognize the change in focal length). Note that, in the following description, descriptions that overlap with those of the embodiment 1 described above will be omitted as appropriate.

In the embodiment 2, when starting the focal length control, as in the embodiment 1 described above, first, if the setting of the first focal length, which is the basic focal length of the variable focus lens 3, has not been completed, the first focal length is set (S11). When the setting of the first focal length of the variable focus lens 3 is completed and the user wears the spectacles 1, this is detected by the wearing sensor 21 (Yes in S12), and the main control portion 11 executes the program for controlling the focal length to start the focal length control.

When the focal length control is started, the main control portion 11 sets the focal length change condition as in the embodiment 1 described above (S13). Setting of this focal length change condition includes a setting of the focal length change condition such as a time to maintain the second focal length (specified time), a control range of the focal length to be changed (difference between the first focal length and the second focal length), a time for repeating an operation of switching from the first focal length to the second focal length (repetition time), and the change profile of focal length. Setting values for these conditions are stored in the storage portion such as the RAM in the main control portion 11, and the main control portion 11 reads out the setting values stored in the storage portion and sets the focal length change conditions.

The setting values for the various focal length change conditions described above may be fixed values or variable values, and if they are variable values, for example, they may be values that can be changed in response to a user operation, or may be values that calculated by a predetermined calculation program.

The first focal length of the focal length control in the embodiment 2 is the variable value, and the main control portion 11 functions as the setting change portion that changes the setting of the first focal length, and functions together with the operation portion 13 as the setting change portion in a case that the variable value is changed according to the user operation. Further, the second focal length of the focal length control in the embodiment 2 is also the variable value, and the main control portion 11 changes the second focal length according to the first focal length whose setting has been changed. Specifically, for example, if the control range (change width) of the focal length is a fixed value, a value obtained by adding the fixed value (range of change in focal length) to the first focal length is set as the second focal length. Further, if table data or the like describing a correspondence between the first focal length and the second focal length is stored in the storage portion, the second focal length is set according to the first focal length set in processing step S1.

An optimum value of the control range (change width) of the focal length of the variable focus lens 3 controlled by the focal length control in the embodiment 2 (that is, an optimum value of the difference between the first focal length and the second focal length) varies depending on a degree of abnormality of the user's eye (user's prescribed optical power, etc.). Therefore, the optimal value of the difference between the first focal length and the second focal length, which is expected to have a high myopia suppression effect, differs depending on the first focal length that is set to a focal length corresponding to the user's prescribed optical power. Because it is thought that the optimal movement of relaxation and contraction of the ciliary muscle of the eye, which achieves a high myopia suppression effect, differs depending on the user's prescribed optical power (depending on the degree of abnormality of the user's eye).

For example, if the high myopia suppression effect is expected by setting the second focal length such that the greater the optical power corresponding to the first focal length, the larger the change width of the focal length, according to this, the main control portion 11 changes the second focal length in accordance with the first focal length whose setting has been changed. Conversely, if the high myopia suppression effect is expected by setting the second focal length such that the greater the optical power corresponding to the first focal length, the smaller the change width of the focal length, according to this, the main control portion 11 changes the second focal length in accordance with the first focal length whose setting has been changed.

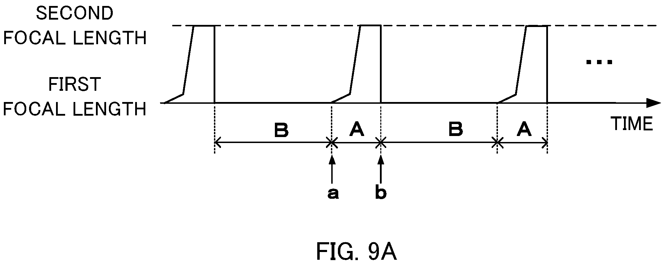

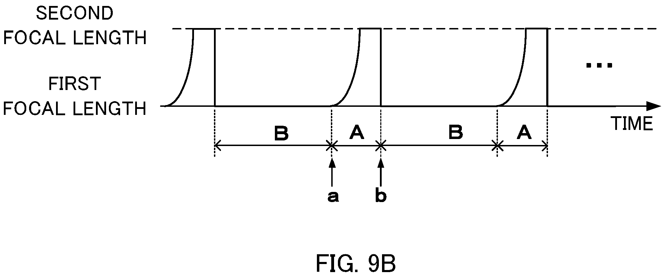

FIG. 9A and FIG. 9B are explanatory diagrams showing an example of a focal length change timing in the focal length control in the embodiment 2.

In the focal length control of the embodiment 2, the time (specified time) from a state that the user is viewing the view object through the variable focus lens set to the first focal length until the user finishes viewing the view object through the variable focus lens 3 changed to the second focal length is set to be so short that the user has difficulty or cannot recognize it. This makes it possible to relax the ciliary muscle of the user's eye under the user's unconsciousness.

Therefore, the specified time A from the time when the focal length of the variable focus lens 3 starts to change from the first focal length (reference "a" in FIG. 9A and FIG. 9B), the focal length becomes the second focal length, and until the time when starting to change from the second focal length (reference "b" in FIG. 9A and FIG. 9B) is set to be so short that the user has difficulty or cannot recognize it. Specifically, it is preferable to set the time within a range of 3/100 seconds or less.

If the specified time A is 3/100 seconds or less, the user can view the view object through the variable focus lens 3 changed to the second focal length for a time so short that the user has difficulty or cannot recognize it. Therefore, it is possible to relax or contract the ciliary muscle of the eye under the user's unconsciousness, and even if the focal length control is continued for a long time, the user is unlikely to feel discomfort or get tired. As a result, it is possible to continuously relax and contract the ciliary muscle of the user's eye over a long period of time, and it is expected that a higher myopia suppression effect, etc. will be obtained.

However, if the specified time A is less than 1/3000 second, the time is too short and there is a possibility that the ciliary muscle of the eye cannot be relaxed or contracted. Therefore, it is preferable to set the specified time A within a range of 1/3000 seconds or more and 3/100 seconds or less.

In addition, the time B for repeating the operation of switching from the first focal length to the second focal length is a parameter that determines a frequency of switching from the first focal length to the second focal length, and is set as appropriate within a range that the higher myopia suppression effect etc. can be obtained. When the focal length control is repeated at a constant cycle T (=A+B) as in the embodiment 2, the specified time A and the repetition time B can be defined by parameters such as the cycle T and a duty ratio, for example.

Further, the change profile of focal length is preferably a change profile in which the rate of change in the focal length increases as time passes, as in the embodiment 1 described above. A specific example of the change profile of focal length in the embodiment 2 is, for example, as shown in FIG. 9A, a change profile such that there is a period in which the focal length increases from the first focal length at a first rate of change, and thereafter there is a period in which the focal length increases to the second focal length at a second rate of change (rate of change larger than the first rate of change). Alternatively, a change profile showing an inverse parabolic or exponential change as shown in FIG. 9B may be used.

In particular, as shown in FIG. 9B, a change profile showing the inverse parabolic or exponential change in which the rate of change in focal length increases as time passes is preferable, and the reason for this is as described in Embodiment 1 above.

Note that as the change profile of focal length, for example, it is also possible to use a change profile in which the rate of change in the focal length decreases as time passes. In this way, even with a change profile in which the rate of change in focal length decreases as time passes, it is thought that it is possible to continuously relax the ciliary muscle in the user's eye over a long period of time without the user noticing, and there is a possibility that the higher myopia suppression effect can be obtained.

Note that the exponential change may also include a logarithmic change. For example, a relationship between sensation and stimulus can be described as follows.

When an optical power is increased, a relationship between the minute increment dE in sensory magnitude and the minute increment dR in optical power is confirmed by trial by trial, with dE/dR inversely proportional to the optical power R. Specifically, the relationship between the minute increment dE in sensory magnitude and the minute increment dR in optical power can be expressed as in the following equation (1).

[Mathematical 1]

$$dE / dR = 10 / R$$

$$dE = 10 \times dR / R \quad \cdots (1)$$

By integrating both sides of the above equation (1), a following equation (2) is obtained. Note that "C" in the equation (2) is an integral constant, and "log" is a natural logarithm.

[Mathematical 2]

$$\int dE = \int 10 \times dR / R$$

$$E = 10 \times \int (1 / R) \, dR$$

$$= 10 \times \log R + C \quad \cdots (2)$$

From the above equation (2), it can be understood that the sensory magnitude E obtained by integrating the minute increment dE of the sensory magnitude is proportional to the logarithm of the optical power R.

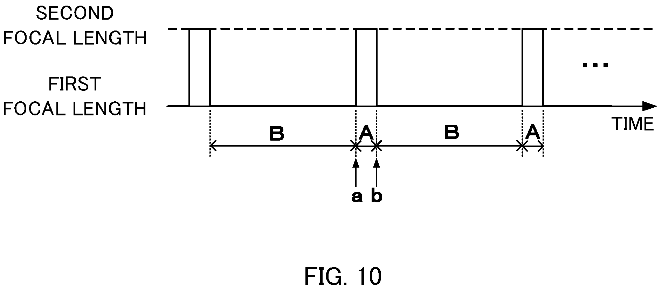

In the embodiment 2, the focal length of the variable focus lens 3 is changed from the first focal length to the second focal length so fast that it is difficult or impossible for the user to recognize it, but in this case, as shown in FIG. 10, when the focal length is changed from the first focal length to the second focal length in one step, the change will be easily noticed by the user. Therefore, in the case shown in FIG. 10, it is required to change the focal length of the variable focus lens 3 even faster. On the other hand, in the case of a change profile in which the rate of change in focal length increases as time passes (for example, the change profiles shown in FIG. 9A and FIG. 9B) as in the embodiment 2, it is difficult for the user to notice the change in focal length. Therefore, it is not necessary to change the focal length of the variable focus lens 3 as quickly as in the case shown in FIG. 10. As a result, a degree of freedom in setting the specified time A increases, and it is possible to obtain the higher myopia suppression effect.

After setting the focal length change condition, the main control portion 11 controls the voltage change portion 12 according to the set focal length change condition, and starts a control that automatically change the focal length of the variable focus lens 3 (S14). As a result, the voltage (voltage corresponding to the first focal length) applied to each of the second electrodes 302A to 302H of the variable focus lens 3 is changed by the voltage change portion 12 at a predetermined timing (time point "a" in FIG. 9A and FIG. 9B) during the specified time A according to the set change profile, and the focal length of the variable focus lens 3 is controlled to change temporarily to the second focal length (S15, S16). In the embodiment 2, in order to obtain the myopia suppression effect for the nearsighted user, a control is performed to switch from the first focal length corresponding to the prescribed optical power of the nearsighted user to the second focal length that is longer than the first focal length. Therefore, the focal length of the variable focus lens 3 is switched from the first focal length corresponding to negative optical power to the second focal length corresponding to positive optical power. In addition, if it is required to forcibly contract the ciliary muscle of the user's eye for the purpose of obtaining a hyperopia suppression effect, etc., a control may be performed to switch from the first focal length corresponding to the prescribed optical power of the user to the second focal length that is shorter than the first focal length.

When the specified time A has elapsed from the time point "a" when the focal length of the variable focus lens 3 was changed from the first focal length (S15), the main control portion 11 controls the voltage change portion 12 to return the focal length of the variable focus lens 3 to the first focal length (basic focal length corresponding to the prescribed optical power) (S16). Thereafter, when the repetition time B has elapsed from the time point when the focal length was returned to the first focal length (the time point "b" when a change from the second focal length starts) (Yes in S17), the main control portion 11 restarts the processing step S15, and execute a process for temporarily switch the focal length of the variable focus lens 3 to the second focal length according to the set focal length change condition (S15 to S17).

On the other hand, when the user removes the spectacles 1, this is detected by the wearing sensor 21 (Yes in S18), and the detection signal is sent from the wearing sensor 21 to the main control portion 11. Upon receiving this detection signal, the main control portion 11 ends the focal length control.

It is noted that process steps and configuration elements in the ophthalmic lens apparatus such as spectacles 1 described in the present specification can be implemented with various means. For example, these process steps and configuration elements may be implemented with hardware, firmware, software, or a combination thereof.

With respect to hardware implementation, means such as processing sections or the like used for establishing the foregoing steps and configuration elements may be implemented in one or more of an application-specific IC (ASIC), a digital signal processor (DSP), a digital signal processing device (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing sections or the like for using to establish the foregoing configuration elements may be implemented with a program (for example, a code such as a procedure, a function, a module, an instruction, etc.) for performing a function described in the present specification. In general, any computer/processor readable medium of clearly materializing the code of firmware and/or software may be used for implementation of means such as processing sections and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage section, or the like. The code may be executed by one or more of computers and processors, and a certain aspect of functionalities described in the present specification may be executed by a computer or processor.

The foregoing medium may be a non-temporary recording medium. The foregoing code of the program may be readable and executable by a computer, processor, or other device or apparatus machine, and its format is not limited to a specific format. For example, the foregoing code of the program may be any of source code, object code, and binary code, or may be a mixture of two or more of these codes.

REFERENCE SIGNS LIST

1: spectacles
2: spectacle frame
3: variable focus lens
4: bridge portion
4a: slide portion
6: lens-holding portion
7: nose-pad portion
8: endpiece portion
8a: mounting portion

8b: hinge portion
9: temple portion
10: control apparatus
11: main control portion
12: voltage change portion
13: operation portion
20: battery
21: wearing sensor
301: first electrode
301a, 301b: insulating layer
302A to 302H: second electrode
303, 304: window member
311: insulating liquid
312: conductive liquid
D: inter-lens distance
I: interface
Ia: end
O: axis
PD: pupillary distance

**Claims**

1. A variable-focus-lens control apparatus for controlling a focal length of a variable focus lens for eyes, comprising:
a control portion for executing a focal length control to control the focal length of the variable focus lens so that the focal length becomes longer or shorter continuously or stepwise.

2. The variable-focus-lens control apparatus according to claim 1,
wherein the focal length control controls the focal length of the variable focus lens so that the focal length becomes continuously longer or shorter over a predetermined change time.

3. The variable-focus-lens control apparatus according to claim 2,
wherein the predetermined change time is set so that a change in the focal length by the focal length control is so slow that it is difficult for humans to recognize the change.

4. The variable-focus-lens control apparatus according to claim 3,
wherein the predetermined change time is 3 seconds or more.

5. The variable-focus-lens control apparatus according to any one of claims 2 to 4,
wherein the control portion executes the focal length control so that a rate of change in the focal length increases as time passes.

6. The variable-focus-lens control apparatus according to claim 1,
wherein the control portion executes the focal length control so that a rate of change in the focal length increases as time passes.

7. The variable-focus-lens control apparatus according to claim 6,
wherein the control portion executes the focal length control so that the focal length becomes longer or shorter exponentially.

8. The variable-focus-lens control apparatus according to any one of claims 1 to 4, 6, or 7,
wherein the control portion executes the focal length control so that the focal length changes from a focal length corresponding to negative optical power to a focal length corresponding to positive optical power.

9. The variable-focus-lens control apparatus according to any one of claims 1 to 4, 6, or 7,
further comprising a setting change portion for changing a setting of the starting focal length of the focal length control.

10. The variable-focus-lens control apparatus according to any one of claims 1 to 4, 6, or 7,

further comprising a change-range changing portion for changing a change range of the focal length that is changed by the focal length control.

11. The variable-focus-lens control apparatus according to claim 9,
   further comprising a change-range changing portion for changing a change range of the focal length that is changed by the focal length control, according to the starting focal length whose setting is changed by the setting changing portion.

12. An ophthalmic lens apparatus comprising:

   a variable focus lens for eyes, and
   a variable-focus-lens control device for controlling a focal length of the variable focus lens;
   wherein the variable-focus-lens control apparatus according to any one of claims 1 to 4, 6, or 7 is used as the variable-focus-lens control device.

13. Spectacles comprising the ophthalmic lens apparatus according to claim 12,
   wherein the variable focus lens is held in a spectacle frame.

14. The spectacles according to claim 13,

   further comprising a wearing detection portion for detecting that an user wears the spectacle frame,
   wherein the control portion starts the focal length control when the wearing detection portion detects that the user wears the spectacle frame.

15. A control method for controlling a focal length of a variable focus lens for eyes,
   wherein the focal length of the variable focus lens is controlled so that the focal length becomes longer or shorter continuously or stepwise.

FIG. 1

FIG. 2

FIG. 3

FIG. 4

FIG. 5

ENDING
FOCAL LENGTH

STARTING
FOCAL LENGTH

TIME

FIG. 6A

ENDING
FOCAL LENGTH

STARTING
FOCAL LENGTH

TIME

• • •

FIG. 6B

FIG. 7

```
                    ┌─────────────┐
                    │    START    │
                    └─────────────┘                    S11
                           │
        ┌──────────────────────────────────────────┐
        │      SETTING OF FIRST FOCAL LENGTH        │
        │   (SETTING OF BASIC REFRACTIVE POWER)     │
        └──────────────────────────────────────────┘
                           │
              ┌────────────▼──────┐
        No    ╱                    ╲              S12
        ┌────◄     USER WAERS?      ►
        │     ╲                    ╱
        │      └──────────┬───────┘
        │              Yes │
        │     ┌──────────────────────────────┐    S13
        │     │         SETTING OF           │
        │     │  FOCAL LENGTH CHANGE CONDITION│
        │     └──────────────────────────────┘
        │                  │
        │     ┌──────────────────────────────┐
        │     │  START AUTOMATIC CHANGE       │    S14
        │     │     OF FOCAL LENGTH           │
        │     └──────────────────────────────┘
        │                  │
        │     ┌──────────────────────────────┐
        │     │    SWITCH FOCAL LENGTH        │
        │     │  TO SECOND FOCAL LENGTH       │    S15
        │     │  DURING SPECIFIED TIME A      │
        │     └──────────────────────────────┘
        │                  │
        │     ┌──────────────────────────────┐
        │     │      RETURN TO               │     S16
        │     │   FIRST FOCAL LENGTH         │
        │     └──────────────────────────────┘
        │                  │
        │        ┌─────────▼────────┐
        │        ╱                   ╲           S17
        │       ╱  REPETITION TIME HAS ╲   Yes
        │       ╲      ELAPSED?       ╱───────┐
        │        ╲                   ╱         │
        │         └────────┬───────┘          │
        │   S18         No │                  │
        │     ┌───────────────────┐           │
        │ No  ╱                    ╲          │
        └────◄    USER REMOVES?     ►         │
                 ╲                    ╱         │
                  └─────────┬───────┘          │
                        Yes │                  │
                    ┌─────────────┐            │
                    │     END     │            │
                    └─────────────┘            │
```

FIG. 8

SECOND
FOCAL LENGTH

FIRST
FOCAL LENGTH

B     A     B     A     TIME

a     b

FIG. 9A

FIG. 9B

FIG. 10

## INTERNATIONAL SEARCH REPORT

| International application No. |
| --- |
| **PCT/JP2022/033923** |

### A. CLASSIFICATION OF SUBJECT MATTER

*G02C 7/08*(2006.01)i; *G02C 11/00*(2006.01)i; *G02B 3/14*(2006.01)i; *G02F 1/17*(2019.01)i
FI:  G02C7/08; G02B3/14; G02C11/00; G02F1/17

According to International Patent Classification (IPC) or to both national classification and IPC

### B. FIELDS SEARCHED

Minimum documentation searched (classification system followed by classification symbols)

G02C7/08; G02C11/00; G02B3/14; G02F1/17

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-158107 A (NHN ENTERTAINMENT CORPORATION) 11 October 2018 (2018-10-11) paragraphs [0026], [0040], [0042], [0071]-[0078], fig. 8-9 | 1-13, 15 |
| Y | paragraphs [0026], [0040], [0042], [0071]-[0078], fig. 8-9 | 14 |
| Y | JP 2009-98649 A (PANASONIC CORPORATION) 07 May 2009 (2009-05-07) paragraphs [0045]-[0059] | 14 |
| A | JP 2014-157197 A (HAYASHI, Takao) 28 August 2014 (2014-08-28) paragraphs [0017]-[0031] | 1-15 |
| A | JP 2014-230019 A (PANASONIC CORPORATION) 08 December 2014 (2014-12-08) paragraphs [0032]-[0042] | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **06 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/033923**

| Patent document cited in search report | | | Publication date (day/month/year) | Patent family member(s) | Publication date (day/month/year) |
|---|---|---|---|---|---|
| JP | 2018-158107 | A | 11 October 2018 | US 2018/0275367 A1 paragraphs [0045], [0059], [0061], [0090]-[0097], fig. 8-9 KR 10-2018-0107433 A | |
| JP | 2009-98649 | A | 07 May 2009 | (Family: none) | |
| JP | 2014-157197 | A | 28 August 2014 | (Family: none) | |
| JP | 2014-230019 | A | 08 December 2014 | US 2014/0347456 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017173825 A